# EUROPEAN PATENT SPECIFICATION

(11) **EP 2 986 142 B1**
(45) Date of publication and mention of the grant of the patent: **18.07.2018**
(21) Application number: 14717706.7
(22) Date of filing: 03.04.2014
(51) Int. Cl.: A23L 5/10, A23L 3/18, A21B 1/10, A21B 1/48

(54) **IMPROVED FOOD COOKING INSTALLATION.**
VERBESSERTE ANLAGE ZUM KOCHEN VON LEBENSMITTELN
INSTALLATION DE CUISSON D'ALIMENTS AMÉLIORÉE

(30) Priority: 16.04.2013 IT VE20130016
(43) Date of publication of application: 24.02.2016
(73) Proprietor: Tecno Pool S.P.A., 35010 - San Giorgio in Bosco (PD) (IT)
(72) Inventor: LAGO, Leopoldo, I-35013 Cittadella (IT)
(74) Representative: Piovesana, Paolo
(86) International application number: PCT/EP2014/056699
(87) International publication number: WO 2014/170134

(56) References cited:
- WO-A1-2005/016032
- WO-A1-2009/023548
- WO-A1-2012/122491
- CN-Y- 2 935 830
- ES-A6- 2 004 906
- US-A- 5 078 120
- US-A1- 2004 244 400
- US-A1- 2005 092 730
- US-A1- 2012 043 182

## Description

The present invention relates to a food cooking installation.

Industrial cooking installations are known comprising a tunnel traversed from one end to the other by a continuously driven conveyor belt, on which the foods to be cooked are positioned. This type of installation is particularly bulky and hardly suitable for use where the available space is limited.

Each food is known to be characterised by its own cooking curve, i.e. by a specific variation which the temperature has to follow during the entire cooking cycle; for example the cooking cycle for bread requires greater heat during the initial stage and a lesser heat during the final stage, whereas that for panettone is exactly the opposite; in contrast, meat requires a constant temperature during the entire cooking cycle.

In order to match the cooking curves for the various foods, traditional cooking installations comprise different temperature zones along the tunnel. The temperature values for each zone are hence initially set according to the type of food to be cooked, and once set must be maintained constant to enable the foods driven by the endless conveyor belt to be cooked. As generally it is not possible to instantaneously vary the temperature values in the various tunnel zones, traditional installations are able to simultaneously cook only foods having the same cooking curve.

US 2005/092730 describes a spiral oven wherein, inside a cooking chamber, it is positioned a helical run of a food-carrying conveyor belt in combination with a helical assembly of heat-delivery elements. The driving element of the conveyor belt comprises a large turning barrel that is positioned inside the helical run of the conveyor belt and rotates around a vertical axis. In particular, said turning barrel has a plurality of paddles on its cylindrical surface that contact inboard overhangs extending from flights of conveyor, thus causing the latter to move forward.

The main object of the invention is to propose an improved food cooking
installation which is able to simultaneously handle internally products having mutually different cooking curves.

Another object of the invention is to propose an improved food cooking installation of low energy consumption.

Another object of the invention is to propose a food cooking installation
which operates within a healthy and clean environment.

Another object of the invention is to propose an improved food cooking
installation which improves food cooking, while reducing and optimizing the cooking times required thereby.

Another object of the invention is to propose an improved food installation
in which cooking can take place either directly on the conveyor belt or by using baking-pans for containing the food.

Another object of the invention is to propose an improved cooking installation which is simple and quick to produce and at low cost.

All these and other objects which will be apparent from the ensuing description are attained, according to the invention, by an improved cooking installation with the characteristics indicated in claim 1.

The present invention is further clarified hereinafter in a preferred embodiment described with reference to the accompanying drawings in which:

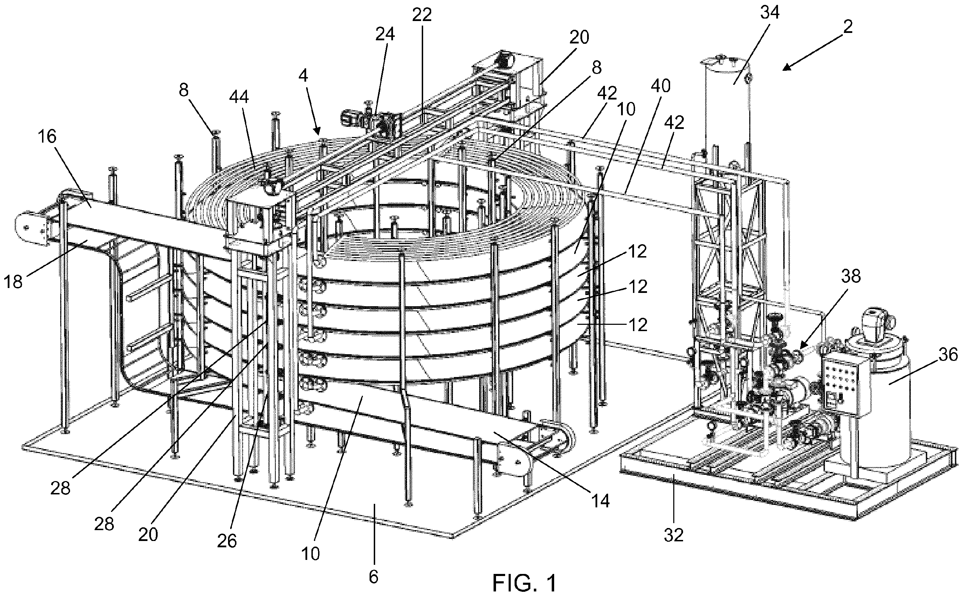

Figure 1 is a perspective view of an improved cooking installation according to the invention,

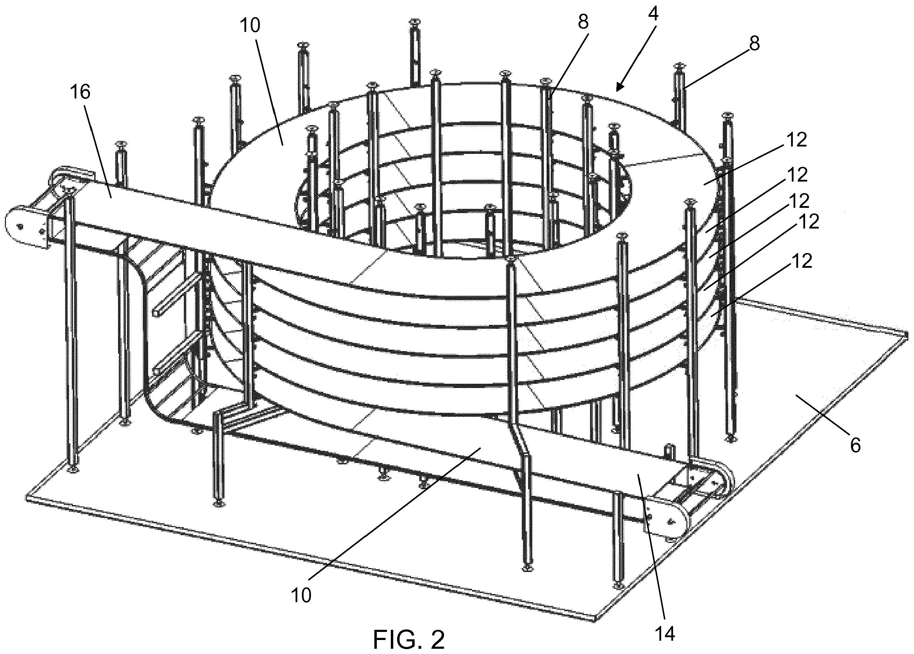

Figure 2 shows it without the heat exchange circuit,

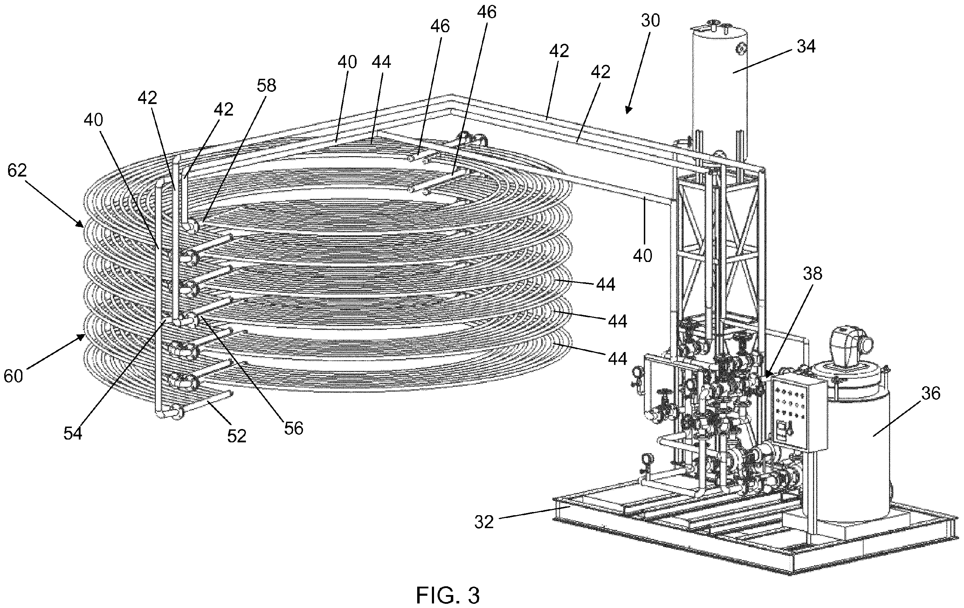

Figure 3 shows it without the conveyor belt,

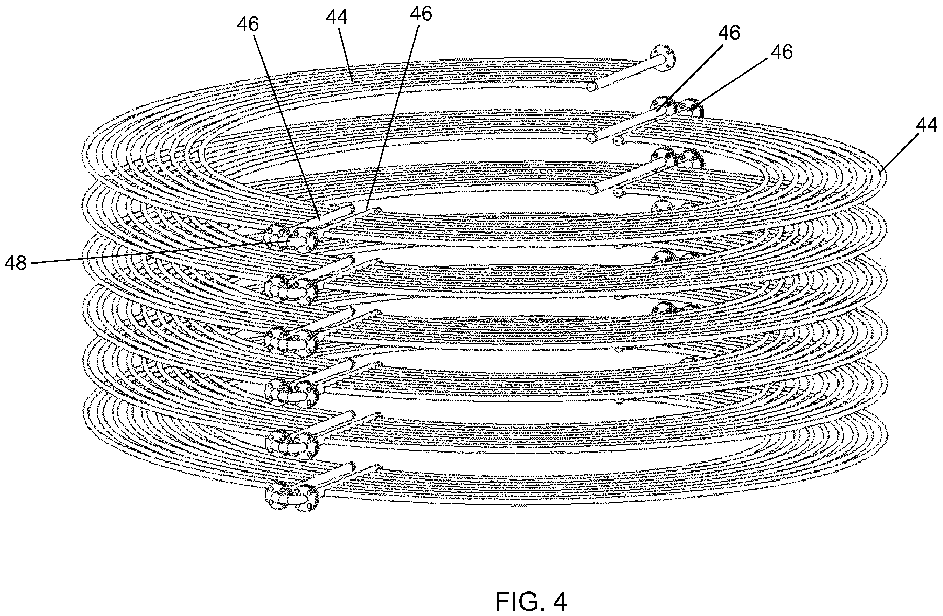

Figure 4 shows a detail of the heat exchange circuit in perspective view.

As can be seen from the figures, the improved food cooking installation 2, according to the invention, comprises a spiral structure 4 intended to be housed within a closed cooking chamber; this chamber is not shown in the figures, however it is similar to a container which has its lower surface coinciding with the base 6 on which the spiral structure 4 is rested, and which is provided with two openings to enable the foods to enter the cooking chamber and exit therefrom respectively.

In particular, the spiral structure 4 comprises a plurality of vertical columns 8 arranged relative to each other such as to define two coaxial cylindrical surfaces for supporting the superposed spiral turns of a conveyor belt 10. In particular, said vertical columns 8 are provided with a plurality of support and guide members suitably spaced apart vertically and defining the various planes 12 of the spiral path followed by the conveyor belt 10.

The installation 2 comprises an entry section 14 and an exit section 16 which can be connected to treatment stations positioned respectively downstream and upstream of the installation 2. Suitably, at the exit section 16 a linkage section 18 is provided, necessary to return the conveyor belt to the entry section 14.

To the sides of the spiral structure 4, two vertical frames 20 are provided, connected together by a horizontal frame 22; this latter is provided with an actuator 24 which, by suitable transmission means, drives the vertical shafts 26 housed in the two vertical frames 20. Moreover, a series of toothed wheels 28 are keyed along the shafts 26, such that their teeth can engage appendices emerging laterally from the facing links of a chain applied to the outer edge of the conveyor belt 10, such that on rotating each shaft 26 by means of the actuator 24, the toothed wheels 28 are made to rotate and drag the conveyor belt 10 into movement.

The installation 2 also comprises a heat exchange circuit 30 through which the fluid used as the thermal vector circulates in order to heat by radiation the products to be cooked. This fluid is preferably diathermic oil.

The circuit 30 comprises a heat control unit 32 positioned outside the chamber housing the spiral structure 4, and provided with a tank 34, a boiler 36 and a plurality of pipes 38. The circuit 30 also comprises an inlet conduit 40, which emerges from the boiler 36 to carry the high temperature fluid to the structure 4, specifically to the lower spiral turn and to an intermediate spiral turn of the circuit, and two outlet conduits 42 which withdraw the cooled fluid from an intermediate spiral turn and from the upper spiral turn, to transfer it to the boiler 36.

In greater detail, the heat exchange circuit 30 is formed from a plurality of pipes 44 wound side-by-side to form a spiral. The pipes 44 are not continuous, but for constructional and installation reasons are divided into portions of length equal to one half of a spiral turn and have their ends connected to radial headers 46, each of which is connected to the adjacent header by a connection portion 48. Again for constructional reasons, the pipes 44 can also consist of lengths of less than one half of a spiral turn, for example equal to one quarter or to one eighth of a spiral turn.

In particular, the inlet conduit 40 is connected to the lower header 52 of the spiral and to an intermediate header 54, while the two outlet conduits 42 are connected to the intermediate header 56, adjacent to the header 54 connected to the inlet conduit 40, and to the upper header 58 of the spiral. In this manner, the heat exchange circuit 30 is divided into two parallel portions 60, 62 (half-circuits), which feed the lower zone and the upper zone of the cooking chamber and can be controlled independent of each other by modulating valves positioned in the two conduits 42, between the spiral structure and the heat control unit 32.

The heat exchange circuit 30 can evidently also be divided into a greater number of parallel portions intended to act on different overlying zones of the cooking chamber.

In any event, the spiral portion of the heat exchange circuit 30 is inserted within the spiral forming the conveyor belt 10, such that each spiral turn thereof is upperly and lowerly faced by a spiral turn defined by the pipes 44 of the heat exchange circuit 30.

The installation 2 is also provided with an electronic management and control unit, not represented in the drawings, for coordination and control of the valves which regulate the flow of the heating fluid in the two portions 60, 62 which form the heat exchange circuit 30 and for controlling the means for driving said conveyor belt.

The installation 2 can also comprise two or more conveyor belts 10, which define a spiral path in which the spiral turns of each conveyor 10 alternate with those of the others.

The operation of the installation according to the invention is apparent from its description. In particular, the food products to be cooked, originating from the treatment station upstream of the installation, are transferred to the entry section 14 of the conveyor belt 10, which then conveys them towards the spiral structure 4.

Then, by following the ascending spiral path of the conveyor belt 10, the heat of the heated fluid contained in the bundle of pipes 44 positioned below and above the spiral turns of the conveyor belt, is transmitted by radiation to the food products, which are hence cooked. Finally, when the conveyor belt 10 reaches the exit section 16, the cooked products are passed from the conveyor belt 10 to a treatment station provided downstream of the cooking installation 2.

If the foods to be cooked require particular cooking cycles, the electronic unit, on the basis of predefined programs, controls the modulating valves in such a manner as to achieve a differentiated temperature in the two zones of the cooking chamber. In particular, if a greater heating fluid velocity is commanded for the upper portion 62 of the bundle of pipes 44, the temperature reached in the upper zone of the cooking chamber is greater than that reached in the lower zone, and vice versa.

From the aforegoing it is apparent that the installation according to the invention is particularly advantageous, in that:
- the use of diathermic oil as heating vector enables stable temperature control and is also particularly suitable for use in the food sector,
- in contrast to air-ventilated traditional installations, it enables a lesser heat dispersion to be achieved, and consequently a greater energy saving; the fact that fan-fed air is no longer used as the environmental heating medium enables humidity to remain unchanged, and also prevents any dust or foreign bodies from being circulated by ventilation,
- the fact that heating takes place by radiation reduces the formation of convection movements inside the cooking chamber,
- the fact that no ventilation or forced air circulation is provided means that product moisture losses are reduced, with consequent better cooking,
- the use of a spiral conveyor enables the overall installation size to be considerably reduced,
- the cooking within the installation can take place without modification either directly on the conveyor belt or in baking-pans, according to requirements, and hence does not require either upstream or downstream any device for transferring products between the conveyor belt and the installation.

## Claims

1. A food cooking installation (2) comprising:
- a cooking chamber,
- at least one conveyor belt (10) positioned in said cooking chamber and following a spiral path of vertical axis, to receive food products and drive them from an inlet opening (14) to an outlet opening (16) of said chamber,
- a heat exchange circuit (30) comprising a bundle of pipes (44) disposed as a spiral inserted within said conveyor belt (10) and divided into several portions (60, 62) involving different vertically superposed zones of said cooking chamber and connected together in parallel, and to a heat control unit (32) for generating a heating fluid,
- means for independently regulating the flow rate of said heating fluid within said portions (60, 62) of the heat exchange circuit (30),
- a management and control unit for said heat exchange circuit (30) and for means for driving said conveyor belt, **characterised in that** the means for driving the conveyor belt comprise toothed wheels (28), which are keyed along shafts (26) and which engage appendices emerging laterally from facing links of a chain applied to the outer edge of the conveyor belt (10), such that, on rotating of each shaft (26) by means of an actuator (24), the toothed wheels (28) are made to rotate and drag said conveyor belt (10) into movement along a spiral structure (4) comprising a plurality of vertical columns (8) arranged relative to each other such as to define two coaxial cylindrical surfaces for supporting the superposed spiral turns of said conveyor belt (10).

2. An installation as claimed in claim 1, **characterised in that** said heat exchange circuit comprises at least one inlet conduit (40) which conveys the fluid from said heat control unit (32) to the inlet of each of said portions (60, 62) of the heat exchange circuit (30), and at least one outlet conduit (42) which conveys the fluid from the outlet of each of said portions (60, 62) of the heat exchange circuit (30) to the heat control unit (32).

3. An installation as claimed in any one of the preceding claims, **characterised in that** the pipes (44) of said bundle are divided into portions of length equal to a fraction of a spiral turn.

4. An installation as claimed in any one of the preceding claims, **characterised in that** the ends of the portions into which the pipes (44) of the bundle are divided are connected together by radial headers (46), which are connected to the adjacent header by a connection portion (48).

5. An installation as claimed in any one of the preceding claims, **characterised in that** said means for independently regulating the flow rate of said heating fluid comprise modulating valves controlled by temperature regulators.

6. An installation as claimed in any one of the claims 2 to 5, **characterised in that** said means for independently regulating the flow rate of said heating fluid are positioned in said at least one inlet conduit (40) or in said at least one outlet conduit (42).

7. An installation as claimed in claim 5, **characterised in that** said electronic management and control unit controls said modulating valves which regulate the flow of the heating fluid in two portions (60, 62) which form the heat exchange circuit (30) in such a manner as to achieve different temperatures between the different portions (60, 62) of the heat exchange circuit (30).

8. An installation as claimed in any one of the preceding claims, **characterised in that** each spiral turn of the conveyor belt (10) is faced upperly and lowerly by one spiral turn of the heat exchange circuit (30).

9. An installation as claimed in any one of the preceding claims, **characterised in that** said heating fluid is diathermic oil.

10. An installation as claimed in any one of the preceding claims, **characterised by** comprising at least two conveyor belts (10) defining a spiral path in which the spiral turns of each conveyor (10) alternate with those of the others.

## Patentansprüche

1. Lebensmittelgaranlage (2), umfassend:
- einen Garraum,
- mindestens ein Förderband (10), das in dem Garraum angeordnet ist und einer Spiralbahn mit vertikaler Achse folgt, um Lebensmittelprodukte aufzunehmen und diese von einer Einlassöffnung (14) zu einer Auslassöffnung (16) des Raums zu führen,
- einen Wärmetauschkreislauf (30), umfassend ein Bündel von Rohren (44), die als eine in das Förderband (10) eingesetzte Spirale angeordnet und in mehrere Abschnitte (60, 62), die verschiedene vertikal übereinander angeordnete Zonen des Garraums beinhalten, geteilt und parallel miteinander und mit einer Wärmesteuereinheit (32) zum Erzeugen eines Heizfluids verbunden sind,
- ein Mittel zum unabhängigen Regeln der Fließgeschwindigkeit des Heizfluids in den Abschnitten (60, 62) des Wärmetauschkreislaufs (30),
- eine Verwaltungs- und Steuereinheit für den Wärmetauschkreislauf (30) und für ein Mittel zum Antreiben des Förderbands,
**dadurch gekennzeichnet, dass** das Mittel zum Antreiben des Förderbands Zahnräder (28) umfasst, die entlang Wellen (26) verkeilt sind und die in Fortsätze eingreifen, die lateral von zugewandten Gliedern einer Kette, die am Außenrand des Förderbands (10) aufgebracht ist, derart heraustreten, dass beim Drehen von jeder Welle (26) durch ein Betätigungselement (24) die Zahnräder (28) dazu veranlasst werden, sich zu drehen und das Förderband (10) in eine Bewegung entlang einer Spiralstruktur (4) zu ziehen, die eine Vielzahl von vertikalen Säulen (8) umfasst, die relativ zueinander angeordnet sind, um zwei koaxiale zylindrische Oberflächen zum Tragen der übereinander angeordneten Spiralwindungen des Förderbands (10) zu definieren.

2. Anlage nach Anspruch 1, **dadurch gekennzeichnet, dass** der Wärmetauschkreislauf mindestens eine Einlassleitung (40), die das Fluid von der Wärmesteuereinheit (32) zu dem Einlass von jedem der Abschnitte (60, 62) des Wärmetauschkreislaufs (30) befördert, und mindestens eine Auslassleitung (42), die das Fluid von dem Auslass von jedem der Abschnitte (60, 62) des Wärmetauschkreislaufs (30) zu der Wärmesteuereinheit (32) befördert, umfasst.

3. Anlage nach einem der vorhergehenden Ansprüche, **dadurch gekennzeichnet, dass** die Rohre (44) des Bündels in Abschnitte von Längen gleich einem Bruchteil einer Spiralwindung geteilt sind.

4. Anlage nach einem der vorhergehenden Ansprüche, **dadurch gekennzeichnet, dass** die Enden der Abschnitte, in die die Rohre (44) des Bündels geteilt sind, durch radiale Rohrverteiler (46) verbunden sind, die mit dem angrenzenden Rohrverteiler durch einen Verbindungsabschnitt (48) verbunden sind.

5. Anlage nach einem der vorhergehenden Ansprüche, **dadurch gekennzeichnet, dass** das Mittel zum unabhängigen Regeln der Fließgeschwindigkeit des Heizfluids Modulationsventile umfasst, die durch Temperaturregler gesteuert werden.

6. Anlage nach einem der Ansprüche 2 bis 5, **dadurch gekennzeichnet, dass** das Mittel zum unabhängigen Regeln der Fließgeschwindigkeit des Heizfluids in der mindestens einen Einlassleitung (40) oder in der mindestens einen Auslassleitung (42) angeordnet ist.

7. Anlage nach Anspruch 5, **dadurch gekennzeichnet, dass** die elektronische Verwaltungs- und Steuereinheit die Modulationsventile steuert, die den Fluss des Heizfluids in zwei Abschnitten (60, 62) regeln, die den Wärmetauschkreislauf (30) auf eine Weise bilden, um verschiedene Temperaturen zwischen den verschiedenen Abschnitten (60, 62) des Wärmetauschkreislaufs (30) zu erreichen.

8. Anlage nach einem der vorhergehenden Ansprüche, **dadurch gekennzeichnet, dass** jede Spiralwindung des Förderbands (10) oberseitig und unterseitig einer Spiralwindung des Wärmetauschkreislaufs (30) zugewandt ist.

9. Anlage nach einem der vorhergehenden Ansprüche, **dadurch gekennzeichnet, dass** das Heizfluid diathermisches Öl ist.

10. Anlage nach einem der vorhergehenden Ansprüche, **gekennzeichnet durch** das Umfassen von mindestens zwei Förderbändern (10), die eine Spiralbahn definieren, in der die Spiralwindungen jedes Förderbands (10) mit denen der anderen abwechseln.

## Revendications

1. Une installation de cuisson (2) comprenant:
- une chambre de cuisson,
- au moins une courroie de transport (10) positionnée dans ladite chambre de cuisson et s'étendant suivant une trajectoire en spirale d'axe vertical, afin de recevoir des produits alimentaires et de les entraîner depuis une ouverture d'entrée (14) jusqu'à une ouverture de sortie (16) de ladite chambre,
- un circuit d'échange thermique (30) comprenant un faisceau de tubes (44) disposés sous forme de spirale insérée à l'intérieur de ladite courroie de transport (10) et divisés en plusieurs portions (60, 62) faisant intervenir différentes zones superposées verticalement de ladite chambre de cuisson et reliés ensemble en parallèle, et à une unité de régulation de chaleur (32) pour générer un fluide de chauffage,
- un moyen pour réguler indépendamment le débit dudit fluide de chauffage à l'intérieur desdites portions (60, 62) du circuit d'échange thermique (30),
- une unité de gestion et de commande pour ledit circuit d'échange thermique (30) et pour le moyen d'entraînement de ladite courroie de transport,
**caractérisée en ce que** le moyen d'entraînement de la courroie de transport comprend des roues dentées (28), qui sont emboîtées le long d'arbres (26) et qui s'engagent dans des appendices émergeant latéralement de liens disposés en face et appartenant à une chaîne appliquée sur le bord extérieur de la courroie de transport (10), de sorte que, lorsque chaque arbre (26) tourne par l'intermédiaire d'un actionneur (24), les roues dentées (28) tournent et mettent en mouvement ladite courroie de transport (10) le long d'une structure en spirale (4) comprenant plusieurs colonnes verticales (8) disposées entre elles de manière à définir deux surfaces cylindriques coaxiales pour soutenir les tours en spirale superposés de ladite courroie de transport (10).

2. Une installation selon la revendication 1, **caractérisée en ce que** ledit circuit d'échange thermique comprend au moins un conduit d'entrée (40) qui achemine le fluide de ladite unité de régulation de chaleur (32) vers l'entrée de chacune desdites portions (60, 62) du circuit d'échange thermique (30), et au moins un conduit de sortie (42) qui achemine le fluide de la sortie de chacune desdites portions (60, 62) du circuit d'échange thermique (30) vers l'unité de régulation de chaleur (32).

3. Une installation selon une ou plusieurs des revendications précédentes, **caractérisée en ce que** les tubes (44) dudit faisceau sont divisés en portions de longueur égale à une fraction de tour en spirale.

4. Une installation selon une ou plusieurs des revendications précédentes, **caractérisée en ce que** les extrémités des portions en lesquelles les tubes (44) du faisceau sont divisés sont raccordées entre elles par des collecteurs radiaux (46) raccordés à chaque collecteur adjacent par une portion de raccordement (48).

5. Une installation selon une ou plusieurs des revendications précédentes, **caractérisée en ce que** lesdits moyens pour réguler indépendamment le débit dudit fluide de chauffage comprennent des vannes modulatrices contrôlées par des régulateurs de température.

6. Une installation selon une ou plusieurs des revendications 2 à 5, **caractérisée en ce que** lesdits moyens pour réguler indépendamment le débit dudit fluide de chauffage sont positionnés dans au moins un desdits conduits d'entrée (40) ou dans au moins un desdits conduits de sortie (42).

7. Une installation selon la revendication 5, **caractérisée en ce que** ladite unité de gestion et de commande électronique commande lesdites vannes modulatrices qui régulent le débit dudit fluide de chauffage en deux portions (60, 62) qui forment le circuit d'échange thermique (30) de manière à atteindre différentes températures entre les différentes portions (60, 62) du circuit d'échange thermique (30).

8. Une installation selon une ou plusieurs des revendications précédentes, **caractérisée en ce que** chaque tour en spirale de la courroie de transport (10) fait face vers le haut et vers le bas à un tour de spirale du circuit d'échange thermique (30).

9. Une installation selon une ou plusieurs des revendications précédentes, **caractérisée en ce que** ledit fluide de chauffage est une huile diathermique.

10. Une installation selon une ou plusieurs des revendications précédentes, **caractérisée en ce qu'**elle comprend au moins deux courroies de transport (10) définissant une trajectoire en spirale sur laquelle les tours en spirale de chaque courroie (10) se font en alternance avec ceux des autres.
